# EUROPÄISCHE PATENTANMELDUNG

(11) **EP 4 331 767 A1**
(43) Veröffentlichungstag der Anmeldung: **06.03.2024**
(21) Anmeldenummer: 23193194.0
(22) Anmeldetag: 24.08.2023
(51) Int. Cl.: B23K 26/0622, B23K 26/06, B23K 26/08, B23K 26/352, B23K 26/362, B41C 1/05, B23K 101/06

(54) **VERFAHREN UND VORRICHTUNG ZUM STRUKTURIEREN DER OBERFLÄCHE EINES ZYLINDERS MITTELS WENIGSTENS EINES LASERSTRAHLS**

(30) Priorität: 24.08.2022 DE 102022121436
(71) Anmelder: Schepers GmbH + Co. KG, 48691 Vreden (DE)
(72) Erfinder: Brüning, Stephan, 48691 Vreden (DE)
(74) Vertreter: Schulze Horn, Kathrin

(57) **Zusammenfassung**

Die Erfindung betrifft ein Verfahren und eine Vorrichtung (10) zum Strukturieren der Oberfläche (12) eines Zylinders (11) mittels wenigstens eines Laserstrahls (13), wie insbesondere eines Druckzylinders und/oder Prägezylinders, vorzugsweise durch Laserablation. Der Laserstrahl (13) wird mittels einer Optik (15) auf der Zylinderoberfläche (12) positioniert. Der Zylinder (11) wird um seine Längsachse (26) rotiert, wobei die optische Achse (17) der Optik (15) relativ zum Zylinder (11) derart entlang der Längsachse (25) bewegt wird, vorzugsweise kontinuierlich oder zumindest im Wesentlichen kontinuierlich, dass die optische Achse (17) der Optik (15) insbesondere entlang einer Schraubenlinie über die Zylinderoberfläche (12) bewegbar ist beziehungsweise bewegt wird. Der Laserstrahl wird (13) fokussiert und/oder als Besselstrahl geformt wird und/oder dass der Laserstrahl (13) relativ zur optischen Achse der Optik (17) repositioniert.

## Beschreibung

Die Erfindung betrifft ein Verfahren zum Strukturieren der Oberfläche eines Zylinders mittels wenigstens eines Laserstrahls gemäß dem Oberbegriff des Anspruchs 1. Außerdem betrifft die Erfindung eine Vorrichtung zum Strukturieren der Oberfläche eines Zylinders mittels wenigstens eines Laserstrahls gemäß dem Oberbegriff des Anspruchs 9.

Für eine Reihe verschiedener Anwendungsfälle ist es erforderlich, die Oberflächen von Zylindern zu strukturieren, insbesondere durch Mikrostrukturieren. Derartige Zylinder werden dann für die Bearbeitung bahnförmiger Materialien eingesetzt, wie beispielsweise für Druck- und/oder Prägeverfahren, insbesondere für den Tiefdruck. Derartige Zylinder sind üblicherweise aus Metall gefertigt, können jedoch zumindest teilweise auch andere Materialien aufweisen.

Üblicherweise werden zur Bearbeitung der Oberfläche derartiger Zylinder mechanische oder auch lithographische Verfahren eingesetzt. Seit einiger Zeit kommt auch Laserstrukturierung mit gepulsten Lasern in Betracht. Beim Abtragen von Material mit Laserpulsen entfallen viele aufwändige Prozessschritte, wie mehrstufige Prozessierungen mit Masken und chemische Behandlungen.

Aktuelle für die Laserstrukturierung von Zylinderoberflächen eingesetzte Laser arbeiten im Wellenlängenbereich zwischen 343 Nanometern (nm) und 1064 Nanometern. Die Fokussierung ist bei den aktuellen Verfahren auf Spotdurchmesser von etwa 2 Mikrometer (µm) begrenzt. Mit den derzeit bekannten Mitteln sind daher Laserstrukturierungen im Auflösungsbereich von 1 µm und kleiner nicht möglich. Derartige und noch höhere Auflösungen werden aber für spezielle Nanostrukturierungen und Anwendungen im Bereich gedruckter Elektronik in zunehmendem Maße erforderlich.

Bei der Laserstrukturierung von Zylindern wird üblicherweise ein typischerweise gepulster Laserstrahl beziehungsweise dessen Fokusspot mittels einer Optik auf die Oberfläche des Zylinders eingestrahlt. Die übliche Fokussierung erzeugt eine gaußförmige Intensitätsverteilung mit einem durch die Beugungsbegrenzung vorgegebenen minimalen Spotdurchmesser.

Es ist daher eine Aufgabe der Erfindung, die Nachteile zu überwinden. Insbesondere soll eine Laserstrukturierung mit höherer Auflösung erreicht werden. Vorzugsweise soll die Strukturierung des Zylinders beschleunigt werden, insbesondere die komplette Bearbeitung.

Die Aufgabe wird gelöst durch ein Verfahren mit den Maßnahmen des Anspruchs 1. Das Verfahren dient zum Strukturieren der Oberfläche eines Zylinders mittels wenigstens eines Laserstrahls, insbesondere durch Laserablation. Bei dem Zylinder handelt es sich insbesondere um einen Druckzylinder und/oder Prägezylinder, beispielsweise für die Drucktechnik, vorzugsweise für Tiefdruckverfahren. Der Laserstrahl wird vorzugsweise mittels einer Optik auf der Zylinderoberfläche positioniert. Der Zylinder rotiert insbesondere um seine Längsachse. Die optische Achse der Optik wird vorzugsweise relativ zum Zylinder derart entlang der beziehungsweise parallel zur Längsachse bewegt, vorzugsweise kontinuierlich oder zumindest im Wesentlichen kontinuierlich, dass die optische Achse der Optik insbesondere entlang einer Schraubenlinie über die Zylinderoberfläche bewegbar ist beziehungsweise bewegt wird. Das Verfahren zeichnet sich dadurch aus, dass der Laserstrahl fokussiert und/oder als Besselstrahl geformt wird und/oder dass der Laserstrahl relativ zur optischen Achse der Optik repositioniert wird. Auf diese Weise werden verschiedene Verbesserungen zur Strukturierung von Zylindern ermöglicht. Vor allem kann die Bearbeitungsgeschwindigkeit erhöht werden. Mit einem Besselstrahl kann insbesondere ein besonders hoher Energieeintrag bei kleinem Durchmesser erreicht werden. Damit kann vorzugsweise eine hohe Ablationswirkung in einem kleinen zentralen Bereich des Strahls erreicht werden.

Vorzugsweise wird der Laserstrahl mittels wenigstens eines Strahlformers geformt und/oder fokussiert wird. Ein Strahlformer dient insbesondere zur Erzeugung geeigneter Strahlprofile für das Verfahren. Vorzugsweise wird der Besselstrahl mittels wenigstens eines Strahlformers geformt. Hierzu dient vorzugsweise ein Axikon und/oder ein diffraktives optisches Element (DOE). Es können aber auch geeignete andere optische Komponenten, wie beispielsweise optische räumliche Modulatoren, insbesondere räumliche Lichtmodulatoren (spatial light modulator / SLM), verwendet werden. Im Ergebnis dienen geeignete Strahlformen dazu, optimale Bedingungen für die Strukturierung zu erreichen. Das zentrale Maximum des Besselstrahls ermöglicht insbesondere eine besonders gute, vorzugsweise räumlich eng begrenzte Ablationswirkung.

Der Laserstrahl wird insbesondere auf der Zylinderoberfläche repositioniert. Der Laserstrahl wird vorzugsweise transversal repositioniert. Dies erfolgt insbesondere relativ zur optischen Achse der Optik. Die Repositionierung ermöglicht damit insbesondere, abgesehen von dem Punkt auf der optischen Achse, auch noch zusätzliche Punkte anzusteuern. Auch lassen sich auf diese Weise Punkte mehrfach ansteuern, vorzugsweise als Mehrfachbelichtungen.

Vorzugsweise wird der Laserstrahl mittels wenigstens eines optischen Modulators repositioniert. Dazu dient vorzugsweise ein elektrooptischer Modulator (EOM) und/oder akustooptischer Modulator (AOM). Derartige Modulatoren sind typischerweise schnell im Verhältnis zur Pulsfolge eines Pulslaser. Somit lassen sich vorzugsweise einzelne Pulse adressieren und repositionieren. Dies gilt auch im Hinblick auf die Rotation des Zylinders.

Der Laserstrahl wird insbesondere mit einer Geschwindigkeit relativ zur optischen Achse repositioniert, die größer ist als die Bahngeschwindigkeit der optischen Achse auf der Zylinderoberfläche. Hierzu dient vorzugsweise ein schneller Modulator. Damit können zusätzlich zur Bewegung der optischen Achse über die Oberfläche des Zylinders, insbesondere entlang der Schraubenlinie, zusätzliche Positionen beziehungsweise Punkte bei derselben Umdrehung des Zylinders angesteuert werden. Auch lassen sich auf diese Weise Punkte mehrfach ansteuern, vorzugsweise als Mehrfachbelichtungen.

Besonders bevorzugt wird ein gepulster Laserstrahl verwendet, vorzugsweise erzeugt mit einem Pulslaser. Weiter vorzugsweise werden Laserpulse selektiert, insbesondere einzelne Laserpulse. Insbesondere erfolgt dies mittels wenigstens eines Pulspickers. Auf diese Weise kann eine gezielte Strukturierung einzelner Punkte auf der Oberfläche erreicht werden.

Der Laserstrahl wird insbesondere in mehreren, insbesondere zwei Dimensionen, repositioniert. Bevorzugt erfolgt dies in zwei transversalen Dimensionen. Vorzugsweise dient dazu wenigstens ein mehrachsiger Modulator, weiter vorzugsweise ein zweiachsiger Modulator. Insbesondere wird eine rasterförmige Repositionierung vorgenommen. Damit lassen sich einzelne Punkte mit dem ansteuern, vorzugsweise auch wiederholt und/oder gezielt. Abweichungen vom Verlauf der Schraubenlinie des Laserstrahls auf der Oberfläche sind damit vorzugsweise möglich.

Insbesondere wird durch Repositionierung der optischen Struktur auf dem Modulator, insbesondere einem DOE und/oder SLM, der Laserstrahl auf der Zylinderoberfläche repositioniert. Vorzugsweise kann auch eine Mehrfachbelichtung einzelner Positionen auf der Zylinderoberfläche erreicht werden. Alternativ oder zusätzlich zu einem Besselstrahl kann durch eine DOE oder SLM auch ein Oneup/Motif (einige 10pm x einige 10pm) strukturiert werden. Da sich die Laserenergie auf eine sehr große Fläche verteilt, werden mehrere, typischerweise viele Pulse benötigt, um die gewünschte Tiefe der Strukturierung zu erzielen. In diesem Fall kann jede Spur vorzugsweise mehrfach graviert werden. Die Repositionierung erfolgt insbesondere mittels des Modulators. Falls der Winkelbereich bzw. eine Repositionierung mit dem AOM nicht ausreichend ist, kann insbesondere auch ein SLM zur Repositionierung verwendet werden.

Außerdem wir die oben geschilderte Aufgabe gelöst durch eine Vorrichtung mit den Merkmalen des Anspruchs 9. Die Vorrichtung dient zum Strukturieren der Oberfläche eines Zylinders mittels wenigstens eines Laserstrahls, vorzugsweise durch Laserablation. Vorzugsweise kann ein Verfahren eingesetzt werden, wie es oben beschrieben ist. Bei dem Zylinder handelt es sich insbesondere um einen Druckzylinder und/oder Prägezylinder, beispielsweise für die Drucktechnik, vorzugsweise für Tiefdruckverfahren. Eine Optik ist zum Positionieren des Laserstrahls auf der Zylinderoberfläche vorgesehen. Der Zylinder ist um seine Längsachse rotierbar. Die optische Achse der Optik ist relativ zum Zylinder derart entlang der Längsachse bewegbar, vorzugsweise kontinuierlich oder zumindest im Wesentlichen kontinuierlich, dass die optische Achse der Optik insbesondere entlang einer Schraubenlinie über die Zylinderoberfläche bewegbar ist beziehungsweise bewegt wird. Die Vorrichtung zeichnet sich dadurch aus, dass eine Fokussierung und/oder eine Erzeugung eines Besselstrahls vorgesehen ist und/oder dass ein transversales Repositionieren des Laserstrahls relativ zur optischen Achse der Optik vorgesehen ist.

Vorzugsweise ist wenigstens ein Strahlformer zur Fokussierung des Laserstrahls und/oder zur Erzeugung des Besselstrahls vorgesehen. Besonders bevorzugt dient ein Axikon und/oder ein diffraktives optisches Element (DOE) zur Erzeugung des Besselstrahls. Es können aber auch geeignete andere optische Komponenten, wie beispielsweise optische räumliche Modulatoren, insbesondere räumliche Lichtmodulatoren (spatial light modulator / SLM), verwendet werden. Im Ergebnis dienen geeignete Strahlformen dazu, optimale Bedingungen für die Strukturierung zu erreichen. Damit lässt sich ein Strahlprofil eines Besselstrahls erzeugen. Das zentrale Maximum des Besselstrahls ermöglicht insbesondere eine besonders gute, vorzugsweise räumlich eng begrenzte Ablationswirkung.

Es sind insbesondere Mittel zum Repositionieren des Laserstrahls auf der Zylinderoberfläche und/oder zum transversalen Repositionieren vorgesehen. Das Repositionieren erfolgt insbesondere relativ zur optischen Achse der Optik. Das Repositionieren ermöglicht damit insbesondere, abgesehen vom Punkt auf der optischen Achse, auch noch zusätzliche Punkte anzusteuern. Damit können zusätzlich zur Bewegung der optischen Achse über die Oberfläche des Zylinders, insbesondere entlang der Schraubenlinie, zusätzliche Positionen beziehungsweise Punkte bei derselben Umdrehung des Zylinders angesteuert werden. Auch lassen sich auf diese Weise Punkte mehrfach ansteuern, vorzugsweise als Mehrfachbelichtungen.

Insbesondere ist wenigstens ein Modulator zur transversaler Repositionierung des Laserstrahls vorgesehen. Vorzugsweise werden schnelle Modulatoren verwendet. Insbesondere lassen sich elektrooptische Modulatoren (EOM) und/oder akustooptische Modulator (AOM) und/oder räumliche Lichtmodulatoren (spatial light modulator / SLM) einsetzen. Derartige Modulatoren sind typischerweise schnell im Verhältnis zur Pulsfolge eines Pulslaser. Somit lassen sich vorzugsweise einzelne Pulse adressieren und repositionieren. Dies gilt auch im Hinblick auf die Rotation beziehungsweise Rotationsgeschwindigkeit des Zylinders.

Vorzugsweise erfolgt eine Repositionierung des Laserstrahl mit einer Geschwindigkeit relativ zur optischen Achse, die größer ist als die Bahngeschwindigkeit der optischen Achse auf der Zylinderoberfläche, vorzugsweise mittels eines schnellen Modulators. Damit können weitere Punkte während derselben Umdrehung des Zylinders angesteuert und erreicht werden.

Insbesondere wird ein Laser zur Erzeugung eines gepulsten Laserstrahls eingesetzt, weiter vorzugsweise ein Pulslaser. Vorzugsweise ist eine Selektion von Laserpulsen vorgesehen, insbesondere mittels wenigstens eines Pulspickers. Damit lassen sich, vor allem bei hohen Repetitionsraten des Lasers, gezielt einzelne Pulse auswählen, vorzugsweise zur Strukturierung verwenden.

Eine Repositionierung des Laserstrahls ist vorzugsweise in mehreren, insbesondere zwei Dimensionen, vorgesehen, insbesondere transversalen Dimensionen. Weiter vorzugsweise erfolgt dies mittels wenigstens eines mehrachsigen Modulators, weiter vorzugsweise eines zweiachsigen Modulators. Vorzugsweise ist eine rasterförmige Repositionierung vorgesehen. Damit kann eine Ansteuerung einzelner Punkte gezielt vorgenommen werden. Mittelns eines Rechners kann somit vorzugsweise eine mehrfache Ansteuerung der gesamten Oberfläche des Zylinders erfolgen. Abweichungen vom Verlauf der Schraubenlinie des Laserstrahls auf der Oberfläche sind damit vorzugsweise möglich.

Ein bevorzugtes Ausführungsbeispiel der Erfindung wird im Folgenden anhand der Figuren der Zeichnung näher beschrieben. In dieser zeigen:
Fig. 1 eine Skizze einer Vorrichtung zur Strukturierung von Zylindern,
Fig. 2 eine Optik zur Erzeugung eines Besselstrahls,
Fig. 3 eine Visualisierung eines Besselstrahls,
Fig. 4 eine Optik zur Repositionierung eines Laserstrahls, und
Fig. 5 ein Muster für die Repositionierung eines Laserstrahls.

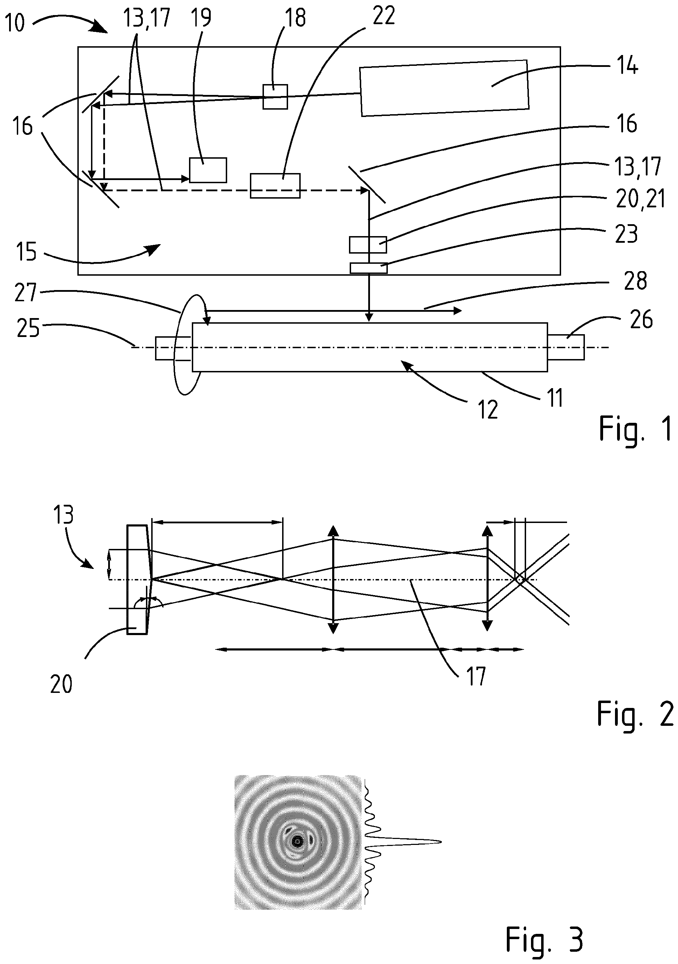

In der Fig. 1 ist eine erfindungsgemäße Vorrichtung 10 zur Strukturierung eines zylinderförmigen Körpers, wie vorzugsweise eines Zylinders 11, gezeigt.

Konkret wird die Oberfläche 12 des Zylinders 11 strukturiert. Insbesondere erfolgt eine Mikrostrukturierung der Oberfläche, also eine Erzeugung feiner Strukturen auf der Oberfläche 12. Dies bedeutet insbesondere, dass eine Strukturierung mit Auflösungen im Mikrometerbereich oder kleiner vorgenommen wird. Insbesondere werden Strukturen mit Abmessungen von in etwa maximal 100 Mikrometern erzeugt, bevorzugt maximal 10 Mikrometern, weiter vorzugsweise maximal 1 Mikrometern, besonders vorzugsweise maximal 100 Nanometern.

Die Strukturierung des Zylinders 11 erfolgt mittels eines Laserstrahls 13. Mittels des Laserstrahls 13 kommt es auf der Oberfläche 12 des Zylinders 11 lokal zu einem starken Energieeintrag, so dass es dort zum Materialabtrag kommt, insbesondere durch Ablation. Es wird daher auch von Laserablation gesprochen.

Der Laserstrahl 13 wird hier mit einem Laser 14 erzeugt. Es handelt sich bei dem Laser 14 vorzugsweise um einen gepulsten Laser beziehungsweise Pulslaser. Die vom Laser 14 abgegebenen Pulse werden dann als Laserstrahl 13 bezeichnet.

Für den Laser 14 kommen je nach zu bearbeitendem Material verschiedene Wellenlängenbereiche in Betracht. Insbesondere lassen sich UV-Laser (Ultraviolett) aus dem Bereich kleine 400 Nanometer Wellenlänge einsetzen. Es können auch sichtbare Laser mit Wellenlängen aus dem Bereich zwischen 400 Nanometern und 800 Nanometern in Betracht kommen. Schließlich können auch IR-Laser (Infrarot) mit Wellenlängen ab 800 Nanometern verwendet werden.

Es können einerseits kontinuierliche strahlende Laser eingesetzt werden, sogenannte Dauerstrichlaser oder cw-Laser (continuous wave). Andererseits lassen sich als gepulste Laser 14 verschiedene Pulslängen verwenden. Beispielsweise kommen Ultrakurpulslaser mit Pulslängen kleiner 10 Pikosekunden (ps) in Betracht, außerdem Kurzpulslaser, allgemein gepulste Laser. Die Repetitionsrate der Pulse kann aus einem weiten Bereich gewählt werden. So lassen sich Laser mit Raten von einigen Hertz (Hz) oder einigen Kilohertz (kHz) bis zu welchen aus dem Bereich der Ultrakurpulslaser verwenden, beispielsweise mit Repetitionsraten im Bereich von Megahertz (MHz) mit Pulsbursts oder auch Gigahertz (GHz).

Es können grundsätzlich auch mehrere Laser 14 vorgesehen sein, gegebenenfalls auch verschiedene Laser. Damit lassen sich schnellere Bearbeitungen erreichen und/oder unterschiedliche Bearbeitungsschritte kombinieren.

Der Laserstrahl 13 wird auf die Oberfläche 12 des Zylinders 11 gerichtet. Hierzu ist eine Optik 15 vorgesehen. Zur Optik 15 zählt in diesem Fall eine ganze Reihe an Komponenten.

Der Laser 14 selber kann zwar grundsätzlich auch bereits als zur Optik 15 gehörend gesehen werden, er wird hier jedoch als separate Komponente gezählt.

Zur Optik 15 gehören aber mehrere Spiegel 16. Diese dienen zur Umlenkung des Laserstrahls 13, hier konkret drei Spiegel 16.

Als optische Achse 17 wird allgemein der zentrale Verlauf eines Strahls 13 durch die beteiligten optischen Komponenten bezeichnet. In den Figuren entspricht daher die optische Achse 17 typischerweise gerade dem Verlauf des eingezeichneten Laserstrahls 13.

In diesem Fall ist ein System zur Selektion einzelner Pulse aus dem Strahl bei hohen Repetitionsraten vorgesehen, ein sogenannter Pulspicker 18. Der Pulspicker 18 ist im Wesentlichen ein Modulator zur transversalen, also seitlichen Ablenkung des Laserstrahls 13. Der abgelenkte Laserstrahl 13 trifft dann auf einen sogenannten Strahlblocker 19, der alle abgelenkten Pulse auffängt. Umgekehrt kann natürlich auch die Ablenkung nur für die gewünschten Pulse erfolgen, so dass der nicht abgelenkte Strahl den Strahlblocker 19 trifft.

Der Laserstrahl 13 beziehungsweise dessen Profil wird in diesem Ausführungsbeispiel mittels eines Strahlformers 20 bearbeitet beziehungsweise geformt. Auf diese Weise können aus dem vom Laser 14 vorgegebenen Strahlprofil andere Profile erzeugt werden. Typischerweise geben Laser 14 gaußförmige Strahlprofile ab. Andere Strahlprofile können aber erfindungsgemäß für die beschriebenen Einsatzzwecke besser geeignet sein.

Vorteilhaft ist in diesem Fall insbesondere die Verwendung eines sogenannten Besselstrahls.

In der Fig. 2 ist ein Aufbau zur Erzeugung eines Besselstrahls mittels eines sogenannten Axikons 21 als Strahlformer 20 gezeigt. Es handelt sich bei einem Axikons 21 um eine kegelartige optische Komponente, bei der die optische Weglänge isotrop vom zentralen Bereich des Strahls zu den Seitenkanten hin abnimmt. In diesem Fall ist ein Querschnitt gezeigt. Der Strahlengang des Laserstrahls 13 ist in der Fig. 2 dargestellt.

Die Fig. 3 zeigt schließlich einen zentralen Ausschnitt aus einem Profil eines derartigen Besselstrahls. In der linken Bildhälfte ist eine Darstellung der Intensität in Strahlrichtung gezeigt. Die rechte Bildhälfte zeigt das zugehörige Intensitätsprofil im Schnitt.

Um eine Repositionierung des Laserstrahls 13 gegenüber der optischen Achse der Optik 15 zu erreichen, ist im Ausführungsbeispiel ein Modulator 22 vorgesehen. Der Modulator dient dazu, den Laserstrahl 13 transversal abzulenken. Mit anderen Worten wird der Strahl seitlich in Bezug auf die Strahlrichtung abgelenkt.

Es handelt sich insbesondere um einen schnellen Modulator 22, der vorzugsweise geeignet ist, einzelne, vorzugsweise aufeinanderfolgende Pulse eines Pulslasers unterschiedlich modulieren zu können. Hierzu eignen sich je nach Frequenzanforderungen beziehungsweise Repetitionsrate des Lasers 14 beispielsweise elektrooptische oder gegebenenfalls auch akustooptische Modulatoren. Auch räumliche Lichtmodulatoren (spatial light modulator / SLM) können hier eingesetzt werden.

Zur Fokussierung des Laserstrahls 13 auf die Oberfläche 12 des Zylinders 11 wird hier beispielhaft eine Linse 23 verwendet. Diese kann in anderen Ausführungsbeispielen selbstverständlich auch entfallen.

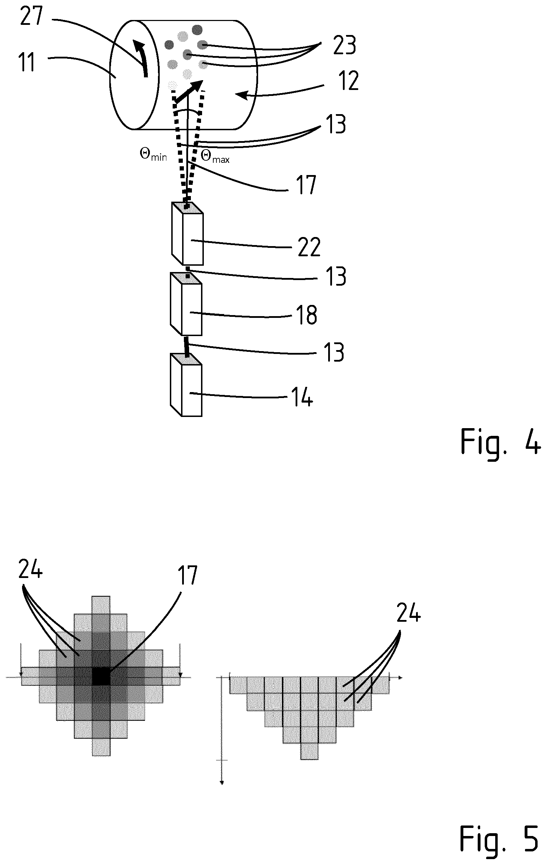

In der Fig. 4 ist ein Prinzipaufbau zur Ablenkung des Laserstrahls 13 zur Repositionierung auf der Oberfläche 12 des Zylinders 11 gezeigt.

Zunächst sind auch hier der Laser 13 sowie der Pulspicker 18 zur Selektion der Pulse dargestellt.

Zur Repositionierung dient hier der Modulator 22, der den Strahl 13 transversal ablenkt. Auf diese Weise lassen sich Bereiche seitlich der optischen Achse 17 erreichen, ohne die übrigen Komponenten der Optik 15 bewegen zu müssen. Derartige mechanische Bewegungen optischer Komponenten, also der Optik 15, sind vergleichsweise langsam, insbesondere im Verhältnis zur Bewegung des Laserstrahls über die Oberfläche 12 des Zylinder 11. Dies gilt umso mehr für die Repetitionsrate eines gepulsten Lasers 13.

Eine Repositionierung des Laserstrahls 13 per Modulator 22 ist wesentlich schneller. Eine Umlenkung des Laserstrahls 13 mit Hilfe eines schnellen Modulators 22 bietet daher Vorteile. Es können dann zusätzlich zur Position der optischen Achse 17 seitlich weitere Punkte 24 adressiert werden, die nicht nur direkt auf, sondern neben der optischen Achse 17 liegen. Auch Mehrfachbelichtungen einzelner Punkte 24 werden möglich.

Ein Einsatz eines räumlichen Lichtmodulators (spatial light modulator / SLM) führt typischerweise zu einer flächigen Verteilung der Pulsenergie. In diesem Fall kann es erforderlich werden, einzelne Stellen auf der Oberfläche 12 mehrfach zu belichten. In diesem Fall kann insbesondere durch Verschieben des Modulationsmusters auf dem Lichtmodulator die Mehrfachbelichtung auf einfache Weise erreicht werden.

Die Fig. 5 zeigt ein Prinzipbild eines Musters beziehungsweise Rasters zur Ablenkung des Laserstrahls 13 von der optischen Achse der Optik. 15. Dazu kann mit dem Modulator 22 eine transversale Ablenkung des Strahls 13 von der zentralen optischen Achse 17 vorgenommen werden.

Die rechte Bildhälfte zeigt dabei die transversale Darstellung der seitlich liegenden Punkte 24. Die verschiedenen Grauwerte zeigen dabei die Tiefe der Strukturierung. Dies kann insbesondere durch Mehrfachbelichtungen einzelner Punkte 24 erreicht werden. Die rechte Bildhälfte zeigt beispielhaft ein resultierendes Tiefenprofil der linken Bildhälfte.

Um den Zylinder 11 schließlich um seine Längsachse 25 rotieren lassen zu können, weist er eine zentrale Drehachse 26 auf. Ein Drehsinn 27 ist ebenfalls eingezeichnet.

Die gesamte Optik 15 kann nun relativ zum Zylinder 11 bewegt werden. Dazu wird eine Pfeilrichtung eines Vorschubs 28 dargestellt. Die Richtung des Vorschubs 28 verläuft parallel zur Längsachse 25 des Zylinders 11. Die Bewegung des Vorschubs 28 ist linear.

Das Verfahren wird im Folgenden kurz anhand der Zeichnungen beschrieben.

Zur Strukturierung der Oberfläche 12 des Zylinders 11 wird nun der Zylinder mittels der Drehachse 26 um seine Längsachse 25 rotiert. Der Laserstrahl 13 wird auf die Oberfläche 12 des Zylinders 11 mittels der Optik 15 eingestrahlt, vorzugsweise fokussiert.

Der Modulator 22 dient dazu, den Strahl 13 seitlich, also transversal gegenüber der optischen Achse 17 der Optik 15 zu versetzen, sprich zu repositionieren. Damit lassen sich nicht nur der Punkt 24 auf der optischen Achse 17, sondern auch daneben liegende Punkte 24 ansteuern.

Insbesondere wird während der Bearbeitung des Zylinders 11 zur Strukturierung der Oberfläche 12 eine rasterförmige Repositionierung des Laserstrahls 13 vorgenommen. Damit lassen sich einzelne Punkte 24 mit dem Modulator 22 ansteuern, vorzugsweise auch wiederholt und/oder gezielt.

Bei einer hohen Repetitionsrate des gepulsten Lasers 14 kann eine gezielte Auswahl von Pulsen mittels des Pulspickers 18 erfolgen. Der Modulator 22 kann so gezielt einzelne Punkte auf der Oberfläche 12 des Zylinders 11 ansteuern. Mit einer hohen Repetitionsrate lassen sich auch mehrere nebeneinander liegende Punkte 24 direkt nacheinander auf der Oberfläche 12 ansteuern, sofern der Modulator 22 schnell genug schaltet. Auf diese Weise kann durch schnelle Modulation die Oberfläche 12 in einer Region mehrfach belichtet werden, ohne eine weitere Umdrehung des Zylinders abwarten zu müssen.

Das Ansteuern der einzelnen Punkte 24 auf der Oberfläche 12 kann durch eine geeignete Computersteuerung vorgesehen werden.

Mittels der Strahlformers 20 beziehungsweise des Axikons 21 kann insbesondere ein Besselstrahl aus dem Laserstrahl 13 erzeugt werden. Damit kann eine besonders gute und aufgrund des Strahlprofils räumliche eng begrenzte Ablationswirkung erreicht werden. Der zentrale Bereich des Strahls 13 weist gegenüber den Nebenmaxima eine besonders hohe Intensität auf. Daher kann die Ablationswirkung auf einen sehr kleinen zentralen Bereich des Strahls 13 begrenzt werden.

Zur Modulation des Laserstrahls bzw. der Strahlformung kann insbesondere auch ein räumlicher Lichtmodulator (spatial light modulator / SLM) vorgesehen werden. Beispielsweise kann es sich dabei um ein Display handeln, wie insbesondere als LCD, TFT, oder ähnlichem. Es ist insbesondere als im Vergleich zur transversalen Erstreckung in Strahlrichtung flaches Bauelement ausgebildet.

Ein Lichtmodulator kann transmittierend und/oder reflektierend arbeiten. Also kann insbesondere das eingestrahlte Licht in Transmission und/oder Reflektion moduliert werden. Auch Mischformen sind möglich, also teilweise Transmission und Reflektion beziehungsweise gleichzeitige Transmission und Reflektion.

Ein Lichtmodulator ist typischerweise zweidimensional ansteuerbar, in der Regel pixelweise beziehungsweise punktweise. Mittels des Lichtmodulators kann demnach die Ausbreitung des Lichts in zwei Dimensionen beeinflusst werden. Beispielsweise lassen sich einzelne Pixel beziehungsweise Punkte des Displays gezielt ansteuern, um die Ausbreitung zu beeinflussen. Beispielsweise lassen sich optische Parameter unabhängig oder abhängig voneinander beeinflussen, wie insbesondere transmittierte und/oder reflektierte Intensität und/oder Phase und/oder Polarisation und/oder Rotation und/oder lokale Strahlablenkung.

Es kann mittels eines Modulators, insbesondere eines räumlichen Modulators, auf einfache Weise eine Strahlformung vorgenommen werden. Dazu wird die gewünschte Strahlform mit dem Modulator eingestellt. Der resultierende Lichtstrahl besitzt dann die gewünschten Eigenschaften, insbesondere die gewünschte Form.

### Bezugszeichenliste

- 10: Vorrichtung
- 11: Zylinder
- 12: Oberfläche
- 13: Laserstrahl
- 14: Laser
- 15: Optik
- 16: Spiegel
- 17: optische Achse
- 18: Pulspicker
- 19: Strahlblocker
- 20: Strahlformer
- 21: Axikon
- 22: Modulator
- 23: Linse
- 24: Punkte
- 25: Längsachse
- 26: Drehachse
- 27: Drehsinn
- 28: Vorschub

## Patentansprüche

1. Verfahren zum Strukturieren der Oberfläche (12) eines Zylinders (11) mittels wenigstens eines Laserstrahls, wie insbesondere eines Druckzylinders und/oder Prägezylinders, vorzugsweise durch Laserablation, wobei der Laserstrahl (13) mittels einer Optik (15) auf der Zylinderoberfläche (12) positioniert wird, wobei der Zylinder (11) um seine Längsachse (26) rotiert wird und wobei die optische Achse (17) der Optik (15) relativ zum Zylinder (11) derart entlang der Längsachse (25) bewegt wird, vorzugsweise kontinuierlich oder zumindest im Wesentlichen kontinuierlich, dass die optische Achse (17) der Optik (15) insbesondere entlang einer Schraubenlinie über die Zylinderoberfläche (12) bewegbar ist beziehungsweise bewegt wird, **dadurch gekennzeichnet, dass** der Laserstrahl (13) fokussiert und/oder als Besselstrahl geformt wird und/oder dass der Laserstrahl (13) relativ zur optischen Achse der Optik (17) repositioniert wird.

2. Verfahren nach Anspruch 1, **dadurch gekennzeichnet, dass** der Laserstrahl mittels wenigstens eines Strahlformers (20) fokussiert und/oder geformt wird und/oder dass der Besselstrahl mittels wenigstens eines Strahlformers (20), vorzugsweise eines Axikons (21) und/oder eines diffraktiven optischen Elements (DOE) und/oder eines räumlichen Lichtmodulators (spatial light modulator / SLM), geformt wird.

3. Verfahren nach Anspruch 1 oder 2, **dadurch gekennzeichnet, dass** der Laserstrahl (13) auf der Zylinderoberfläche (11) repositioniert wird und/oder dass der Laserstrahl (13) transversal repositioniert wird, insbesondere relativ zur optischen Achse (17) der Optik (15).

4. Verfahren nach einem der vorhergehenden Ansprüche, **dadurch gekennzeichnet, dass** der Laserstrahl mittels wenigstens eines optischen Modulators (22) repositioniert wird, vorzugsweise eines elektrooptischen (EOM) und/oder akustooptischen Modulators (AOM) und/oder eines räumlichen Lichtmodulators (spatial light modulator / SLM).

5. Verfahren nach einem der vorhergehenden Ansprüche, **dadurch gekennzeichnet, dass** der Laserstrahl (13) mit einer Geschwindigkeit relativ zur optischen Achse (17) repositioniert wird, die größer ist als die Bahngeschwindigkeit der optischen Achse (17) auf der Zylinderoberfläche (12), vorzugsweise mittels eines schnellen Modulators (22).

6. Verfahren nach einem der vorhergehenden Ansprüche, **dadurch gekennzeichnet,** ein gepulster Laserstrahl (13) verwendet wird, vorzugsweise erzeugt mit einem Pulslaser, wobei vorzugsweise Laserpulse selektiert werden, insbesondere mittels wenigstens eines Pulspickers (18).

7. Verfahren nach einem der vorhergehenden Ansprüche, **dadurch gekennzeichnet, dass** der Laserstrahl (13) in mehreren, insbesondere zwei Dimensionen, repositioniert wird, vorzugsweise transversalen Dimensionen, weiter vorzugsweise mittels wenigstens eines mehrachsigen Modulators (22), weiter vorzugsweise eines zweiachsigen Modulators (22) und/oder dass eine rasterförmige Repositionierung vorgenommen wird.

8. Verfahren nach einem der vorhergehenden Ansprüche, **dadurch gekennzeichnet, dass** durch Repositionierung der optischen Struktur auf dem Modulator (22), insbesondere einem DOE und/oder SLM, der Laserstrahl (13) auf der Zylinderoberfläche (12) repositioniert wird, wobei vorzugsweise eine Mehrfachbelichtung einzelner Positionen auf der Zylinderoberfläche (12) erreicht wird.
Alternativ zu einem Bessel Beam könnte durch eine DOE oder SLM auch ein Oneup/Motif (einige 10pm x einige 10pm) strukturiert werden. Da sich die Laserenergie auf eine sehr große Flache verteilt, werden sehr viele Pulse benötigt um die gewflnschte Tiefe zu erzielen. In Kombination mit Patentanspruch 1. kann jede Spur mehrfach graviert werden. - Falls der Winkelbereich bzw. eine Re-Positionierung mit dem AOM nicht ausreichend ist, könnte auch das SLM zur Re-Positionierung verwendet werden.

9. Vorrichtung zum Strukturieren der Oberfläche (12) eines Zylinders (11) mittels wenigstens eines Laserstrahls (13), wie insbesondere eines Druckzylinders und/oder Prägezylinders, vorzugsweise durch Laserablation, vorzugsweise nach einem Verfahren nach einem der vorhergehenden Ansprüche, mit einer Optik (15) zum Positionieren des Laserstrahls (13) auf der Zylinderoberfläche (12), wobei der Zylinder (11) um seine Längsachse (25) rotierbar ist und wobei die optische Achse (17) der Optik (15) relativ zum Zylinder derart entlang der Längsachse (25) bewegbar ist, vorzugsweise kontinuierlich oder zumindest im Wesentlichen kontinuierlich, dass die optische Achse (17) der Optik (15) insbesondere entlang einer Schraubenlinie über die Zylinderoberfläche (12) bewegbar ist beziehungsweise bewegt wird, **dadurch gekennzeichnet, dass** eine Fokussierung und/oder eine Erzeugung eines Besselstrahls vorgesehen ist und/oder dass ein transversales Repositionieren des Laserstrahls (13) relativ zur optischen Achse (17) der Optik (15) vorgesehen ist.

10. Vorrichtung nach Anspruch 9, **dadurch gekennzeichnet, dass** wenigstens ein Strahlformer (20) zur Fokussierung und/oder Formung des Laserstrahls (13) und/oder zur Erzeugung des Besselstrahls vorgesehen ist, insbesondere ein Axikon (21) und/oder ein diffraktives optisches Element (DOE) und/oder ein räumlicher Lichtmodulator (spatial light modulator / SLM) zur Erzeugung des Besselstrahls.

11. Vorrichtung nach Anspruch 9 oder 10, **dadurch gekennzeichnet, dass** Mittel zum Repositionieren des Laserstrahls (13) auf der Zylinderoberfläche (12) und/oder zum transversalen Repositionieren vorgesehen sind, insbesondere relativ zur optischen Achse (17) der Optik (15).

12. Vorrichtung nach einem der Ansprüche 9 bis 11, **dadurch gekennzeichnet, dass** wenigstens ein Modulator (22), zur transversaler Repositionierung des Laserstrahls (13) vorgesehen ist, vorzugsweise ein elektrooptischer (EOM) und/oder akustooptischer Modulator (AOM) und/oder ein räumlicher Lichtmodulator (spatial light modulator / SLM) ist.

13. Vorrichtung nach einem der Ansprüche 9 bis 12, **dadurch gekennzeichnet, dass** eine Repositionierung des Laserstrahls (13) mit einer Geschwindigkeit relativ zur optischen Achse (17) erfolgt, die größer ist als die Bahngeschwindigkeit der optischen Achse (17) auf der Zylinderoberfläche (12), vorzugsweise mittels eines schnellen Modulators (22).

14. Vorrichtung nach einem der Ansprüche 9 bis 13, **dadurch gekennzeichnet, dass** ein Laser (14) zur Erzeugung eines gepulsten Laserstrahls (13) eingesetzt wird, vorzugsweise ein Pulslaser, wobei vorzugsweise eine Selektion von Laserpulsen vorgesehen ist, insbesondere mittels wenigstens eines Pulspickers (18).

15. Vorrichtung nach einem der Ansprüche 9 bis 14, **dadurch gekennzeichnet, dass** eine Repositionierung des Laserstrahls (13) in mehreren, insbesondere zwei Dimensionen, vorgesehen ist, vorzugsweise zwei transversalen Dimensionen, weiter vorzugsweise mittels wenigstens eines mehrachsigen Modulators (22), weiter vorzugsweise eines zweiachsigen Modulators (22) und/oder dass eine rasterförmige Repositionierung vorgesehen ist.
